# EUROPEAN PATENT APPLICATION

(11) **EP 1 819 174 A2**
(43) Date of publication of application: **15.08.2007**
(21) Application number: 07101985.5
(22) Date of filing: 08.02.2007
(51) Int. Cl.: H04N 7/58

(54) **Broadcasting system and method for providing multiple broadcasting service**

(30) Priority: 09.02.2006 KR 20060012592
(71) Applicant: Samsung Electronics Co., Ltd., Suwon-si, Gyeonggi-Do (KR)
(72) Inventor: Kim, Hoe-Won c/o Samsung Electronics Co., Ltd.,, Suwon-si, Gyeonggi-do (KR); Kim, Ok-Hyeon c/o Samsung Electronics Co., Ltd.,, Suwon-si, Gyeonggi-do (KR); Lee, Ki-Tae c/o Samsung Electronics Co., Ltd.,, Suwon-si, Gyeonggi-do (KR)
(74) Representative: Zimmer, Franz-Josef

(57) **Abstract**

Disclosed is a broadcasting system for providing a multiple broadcasting service, which includes a DMB transmission center for reducing image data in broadcasting data for each of one or more broadcasting channels to reduced image data with a preset size, generating a transport stream including a separate channel for multiple broadcasting from the reduced image data, and broadcasting the generated transport stream; and a DMB terminal for receiving the reduced image data through a multiple broadcasting channel if a user makes request for a multiple broadcasting service, decoding the reduced image data, and displaying the decoded image data on a screen.

## Description

The present invention relates to a digital broadcasting service, and more particularly to a broadcasting system and a method for providing a multiple broadcasting service.

Typically, a digital broadcasting service refers to a broadcasting service that substitutes a conventional analog broadcasting service with high picture quality, high sound quality and high Quality of Service (QoS). With the recent development of digital broadcasting technology and mobile communication technology, much interest has been focused on a mobile broadcasting service that allows users on the move to watch digital broadcasting

A mobile broadcasting service includes a Digital Multimedia Broadcasting (DMB) service using a mobile communication terminal, i.e. a portable terminal, and a live streaming broadcasting service which is a real-time multimedia service provided through a third generation (3G) network.

A DMB service refers to a broadcasting service in which users can watch various multimedia broadcasting through a plurality of channels while moving by means of a personal portable receiver or a vehicle receiver equipped with a nondirectional receiver antenna. Such a DMB service overcomes the limitations of conventional broadcasting services, including passive unidirectionality, a fixed area, service through individual media devices such as a radio and a TV. The DMB service enables one DMB terminal to provide a video/audio service and an integrated service of broadcasting and communication (e.g., DAB/DMB & 3G, WCDMA & Portable Internet, WLAN & WiFi, WiFi & Portable Internet, DAB/DMB & Portable Internet, DVB-H, DVB-T), which have active bidirectionality, personal portability and mobility. Also, the DMB service provides a mobile broadcasting service through a portable terminal having mobility such as a cellular phone, a notebook, a Personal Digital Assistant (PDA) phone, and a Wibro phone.

A portable terminal for providing such a mobile broadcasting service must use a limited battery power source for providing a broadcasting service, instead of a power source which can continuously supply power. Active research is being conducted to provide a method for optimizing a broadcasting service taking into consideration a battery power source.

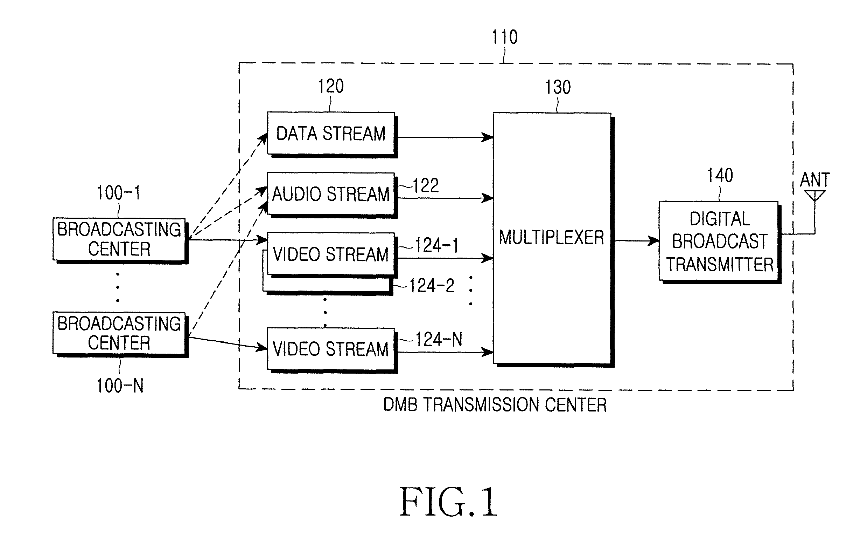

FIG. 1 illustrates a DMB transmission center for transmitting a transport stream for providing a broadcasting service in a general digital multimedia broadcasting system. The DMB transmission center 110 generates a Transport Stream (TS) from broadcasting data transmitted from broadcasting centers 100-1 to 100-N and transmits the transport stream to a DMB terminal. That is, when the DMB transmission center 110 receives broadcasting streams including data streams 120, audio streams 122, and video streams 124-1 to 124-N from a plurality of the broadcasting centers, the DMB transmission center 110 transmits the broadcasting streams to a multiplexer (MUX) 130 to generate the transport stream.

There may be a case in which a user wants to simultaneously watch broadcasting channel. As described above, when a user wants to watch two or more broadcasts, the user can watch two or more broadcasts through a main screen and sub-screens by using a Picture In Picture (PIP) function of a terminal. In order to use the PIP function, a terminal must be able to receive transport streams from a number of broadcasting channels corresponding to broadcasting displayed on a single screen, and must be able to display the broadcasting for the corresponding broadcasting channels, corresponding to the received broadcasting streams, on the screen. That is, in order to perform the PIP function, a terminal must perform a RF reception process in proportion to the number of broadcasting channels which a user wants to watch, store all received broadcasting data in a buffer, decode the stored data, and then display the decoded data on a screen. For instance, in the case of performing a multiple broadcasting service for all receivable broadcasting channels by means of the PIP function, a terminal must perform RF reception and decoding processes for all the broadcasting channels. In the case of implementing a multiple broadcasting service by means of the PIP function, the more broadcasting channels a user wants to watch, the more elements related to RF reception, decoding and display must operate, which result in high battery consumption.

In the case of implementing a multiple broadcasting service by means of the PIP function as described above, a terminal must perform RF reception and decoding processes corresponding to the number of broadcasting channels selected by a user for performing multiple broadcasting. As a result of this, battery consumption of the terminal increases accordingly, and thus the running time of the terminal is considerably reduced.

Accordingly, the present invention has been made to solve the above-mentioned problems occurring in the prior art. It is the object of the present invention to provide a broadcasting system and a method for providing a multiple broadcasting service while minimizing battery consumption of a terminal.

This object is solved by the subject matter of the independent claims.

Preferred embodiments are defined in the dependent claims.

In accordance with one aspect of the present invention, there is provided a broadcasting system for providing a multiple broadcasting service, the broadcasting system includes a digital multimedia broadcasting (DMB) transmission center for reducing image data in broadcasting data for each of one or more broadcasting channels , generating a transport stream including a separate channel for multiple broadcasting from the reduced image data, and broadcasting the generated transport stream; and a DMB terminal for receiving the reduced image data through a multiple broadcasting channel decoding the reduced image data, and displaying the decoded image data on a screen.

In accordance with another aspect of the present invention, there is provided a broadcasting system for providing a multiple broadcasting service, the broadcasting system includes a DMB transmission center for extracting still images from image data in broadcasting data for each of one or more broadcasting channels, converting the extracted still images into selectively extractable data, generating a transport stream including data streams for the converted still images, and broadcasting the generated transport stream; and a DMB terminal for receiving the data streams extracting the still images from the data streams, and displaying the extracted still images on a part of a screen.

In accordance with further another aspect of the present invention, there is provided a method for providing a multiple broadcasting service in a broadcasting system, the method includes reducing by a DMB transmission center image data in broadcasting data for each of one or more broadcasting channels generating a transport stream including a separate channel for multiple broadcasting from the reduced image data, and broadcasting the generated transport stream; and receiving by a DMB terminal the reduced image data through a multiple broadcasting channel decoding the reduced image data, and displaying the decoded image data on a screen.

In accordance with still another aspect of the present invention, there is provided a method for providing a multiple broadcasting service, the method includes extracting by a DMB transmission center extracting still images from image data in broadcasting data for each of one or more broadcasting channels, converting the extracted still images into selectively extractable data, generating a transport stream including data streams for the converted still images, and broadcasting the generated transport stream; and receiving by a DMB terminal the data streams extracting the still images from the data streams, and displaying the extracted still images on a part of a screen.

The present invention will be more apparent from the following detailed description taken in conjunction with the accompanying drawings, in which:
FIG. 1 is a block diagram illustrating a DMB transmission center for transmitting a transport stream for providing a broadcasting service in a general digital multimedia broadcasting system;
FIG. 2 is a block diagram illustrating a broadcasting system to which the present invention is applied;
FIG. 3 is a block diagram illustrating a DMB transmission center for providing a multiple broadcasting service according to the present invention;
FIG. 4 is a block diagram illustrating a DMB transmission center for providing a multiple broadcasting service according to the present invention;
FIGs. 5A and 5B are exemplary views in which the single QVGA image generated from reduced images is transmitted to a terminal in the form of a transport stream according to the present invention;
FIG. 6 is a block diagram illustrating a DMB terminal for providing a multiple broadcasting service according to the present invention;
FIG. 7 is a flow diagram illustrating an operation between a DMB transmission center and a DMB terminal for providing a multiple broadcasting service according to the present invention; and
FIG. 8 is a flow diagram illustrating an operation between a DMB transmission center and a DMB terminal for providing a multiple broadcasting service according to the present invention.

Preferred embodiments of the present invention will be described in detail herein below with reference to the accompanying drawings. It should be noted that the similar components are designated by similar reference numerals although they are illustrated in different drawings. Also, in the following description, a detailed description of known functions and configurations incorporated herein will be omitted when it may obscure the subject matter of the present invention.

The present invention discloses two methods which can provide a multiple broadcasting service by means of a PIP function while reducing battery consumption of a terminal.

First, the present invention provides a method in which a DMB transmission center transmits multiple broadcasting transport streams to a DMB terminal through a separate channel for a multiple broadcasting service, and the DMB terminal receives only transport streams transmitted through a specific corresponding channel at a multiple broadcasting request, instead of receiving transport streams for all broadcasting channels, thereby minimizing battery consumption of a terminal.

The present invention provides a method in which a DMB transmission center can transmit multiple broadcasting transport streams in the form of video streams obtained by combining image data reduced by a preset size for all broadcasting channels. Further, the DMB transmission center can extract still images from images provided from all broadcasting channels and transmit the extracted still images in the form of multiple broadcasting data streams.

According to the present invention, a DMB transmission center transmits multiple broadcasting transport streams through a separate channel so that reduced images for a plurality for broadcasting channels can be displayed on a single screen. Further, a DMB terminal performs RF reception and decoding processes for only one channel for multiple broadcasting when multiple broadcasting is realized, so that battery consumption can be reduced when the multiple broadcasting is realized by means of the PIP function.

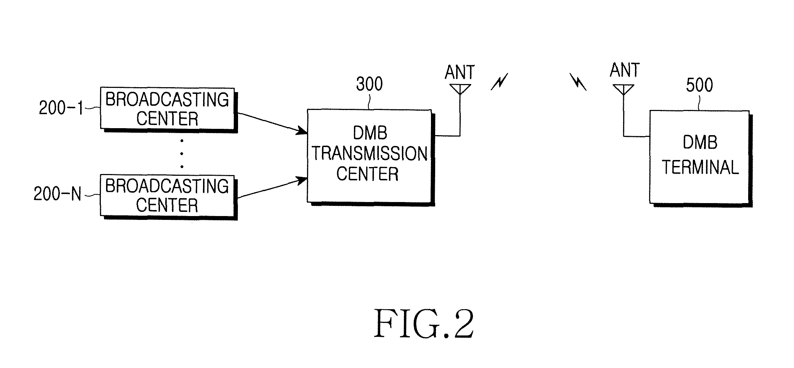

Hereinafter, a construction of a broadcasting system for providing a multiple broadcasting service while reducing battery consumption of a terminal according to the present invention will be described with reference to FIG. 2. FIG. 2 is a block diagram illustrating a broadcasting system to which the present invention is applied.

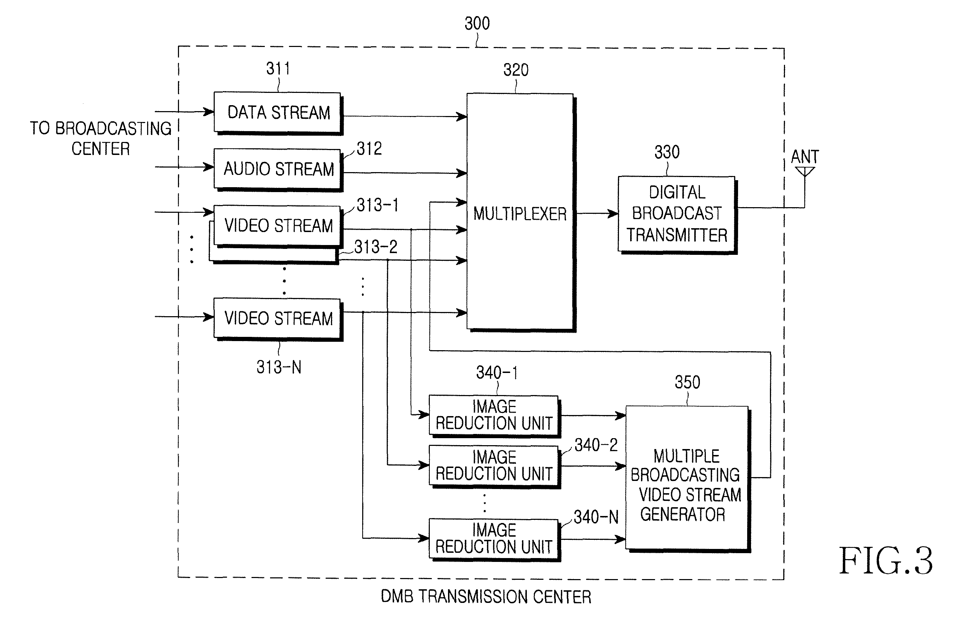

Referring to FIG. 2, a DMB transmission center 300 generates a Transport Stream (TS) from broadcasting data transmitted from broadcasting centers 200-1 to 200-N, and transmits the transport stream to a DMB terminal 500. An internal construction of the DMB transmission center 300 for generating the transport stream will be described in detail with reference to FIG. 3.

When data streams 311, audio streams 312, and video streams 313-1 to 313-N are received from a plurality of the broadcasting centers 200-1 to 200-N as broadcasting streams, the DMB transmission center 300 transmits the broadcasting streams to a Multiplexer (MUX) 320 in order to generate a transport stream. The DMB transmission center 300 according to the present invention includes image reduction units 340-1 to 340-N and the multiple broadcasting video stream generator 350. Each of the image reduction units 340-1 to 340-N reduces input video streams to images with a preset size and transmits the reduced images to a multiple broadcasting video stream generator 350. The multiple broadcasting video stream generator 350 having received the reduced images interconnects the reduced images, thereby generating a single video stream with a screen size of a terminal such as QVGA. For example, in the case of displaying images for 16 broadcasting channels on a single screen, each of the image reduction units 340-1 to 340-N reduces image data of each broadcasting channel to image data having the same size such as 80*60 by means of a reduction algorithm. Then, each of the image reduction units 340-1 to 340-N transmits the reduced image data to the multiple broadcasting video stream generator 350. The multiple broadcasting video stream generator 350 receives the reduced image data, generates video streams from the reduced image data, and transmits the video streams to the multiplexer 320. Then, the multiplexer 320 multiplexes a multiple broadcasting video streams transmitted from the multiple broadcasting video stream generator 350 into a single transport stream together with all data streams, audio streams, and video streams, and transmits the single transport stream to the DMB terminal 500 through a digital broadcast transmitter 330.

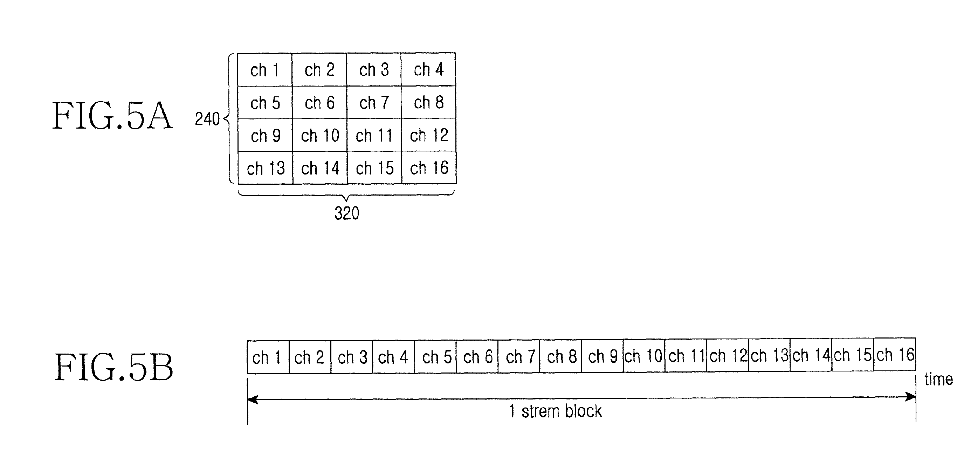

FIG. 5A is an exemplary view in which image data for 16 broadcasting channels are reduced so that the image data can be displayed on a single screen. Referring to FIG. 5B, it can be understood that the multiple broadcasting video streams for 16 broadcasting channels are time-divided and transmitted through one channel. The multiple broadcasting video streams can be transmitted through a separate channel from the channels for transmitting video streams for each broadcasting channel from broadcasting centers.

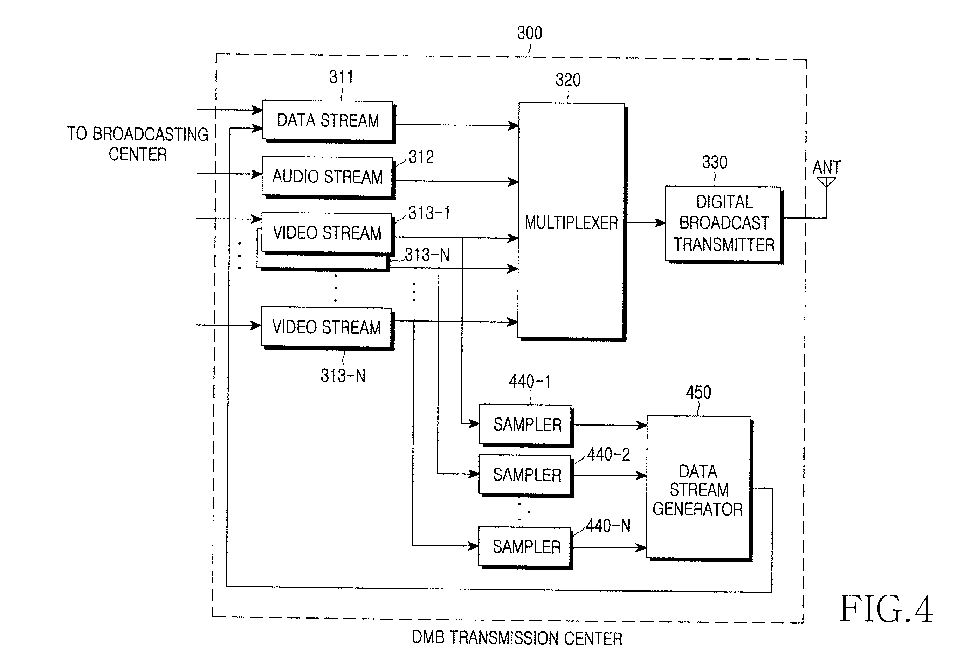

The DMB transmission center 300 having the construction as illustrated in FIG. 3 reduces real-time images received from each broadcasting center, generates a single video stream from the reduced real-time images, and transmits the single video stream to the DMB terminal 500. In another embodiment, the DMB transmission center 300 can extract still images for received real-time images, reduce the still images, insert the reduced still images into a transport stream as data streams, and transmit the transport stream. Hereinafter, a construction of the DMB transmission center 300 for providing still images for each broadcasting channel for multiple broadcasting to a DMB terminal 500 as data streams will be described with reference to FIG. 4.

When the DMB transmission center 300 receives data streams 311, audio streams 312, and video streams 313-1 to 313-N from a plurality of broadcasting center, the DMB transmission center 300 transmits the broadcasting streams to the multiplexer 320 in order to generate a transport stream. The DMB transmission center 300 includes samplers 440-1 to 440-N and a data stream generator 450 for multiple broadcasting. Each of the samplers 440-1 to 440-N extracts still images for real-time images from received video streams and transmits the still images to the data streams generator 450. Each of the samplers 440-1 to 440-N extracts still images from a real-time moving picture with a predetermined period, for example with a period of 3 frames per a second. In FIG. 4, the still images for each broadcasting channel generated from the samplers are transmitted to the data stream generator 450 intact. If an operation for reducing each still image output from the samplers is added, each the still image may be reduced to images of a preset size and may also be transmitted to the data stream generator 450. Then, the data stream generator 450 converts the still images transmitted from the samplers 440-1 to 440-N into selectively extractable data, the data stream generator 450 inserts the converted data into data streams for a broadcasting data service. Then, the multiplexer 320 generates a transport stream including data streams for still images for multiple broadcasting and transmits the generated transport stream from the digital broadcast transmitter 330 to the DMB terminal 500.

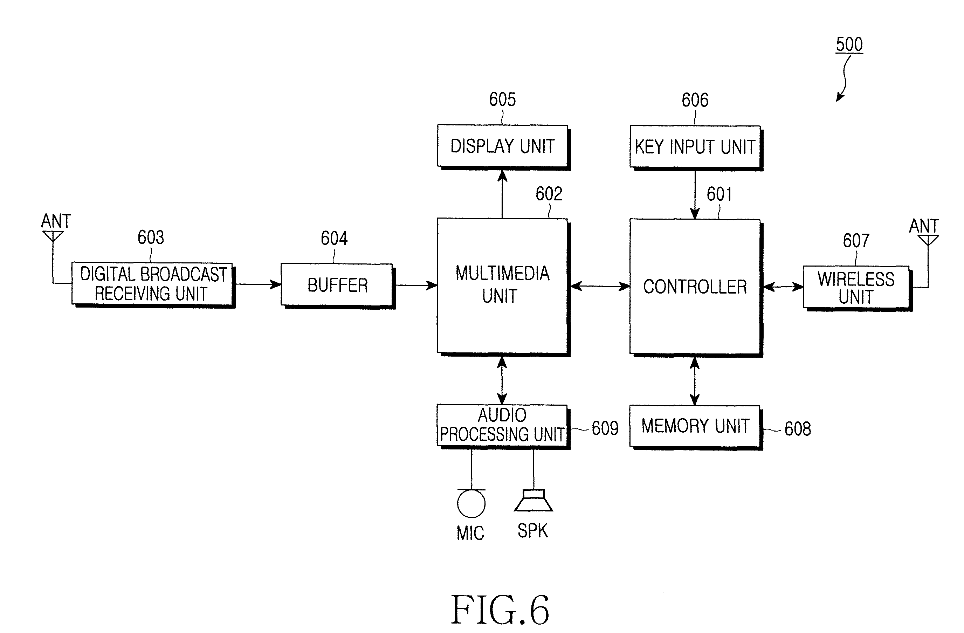

An internal construction and operation of the DMB terminal 500 for providing a multiple broadcasting service by means of the PIP function will be described with reference to FIG. 6. The DMB terminal 500 receives a transport stream including video streams or data streams from the DMB center 300 having the construction described as above.

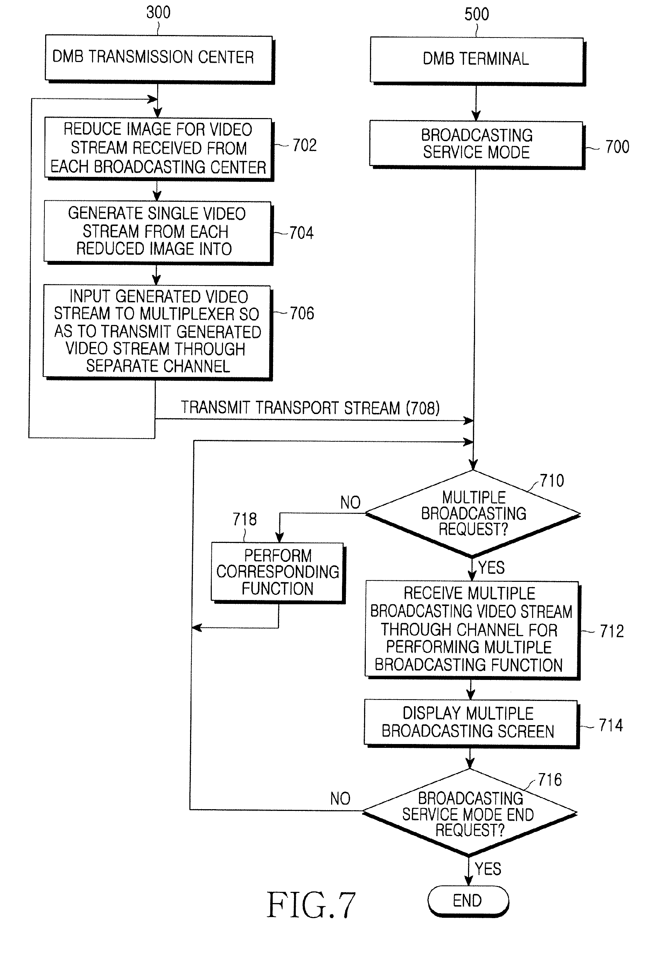

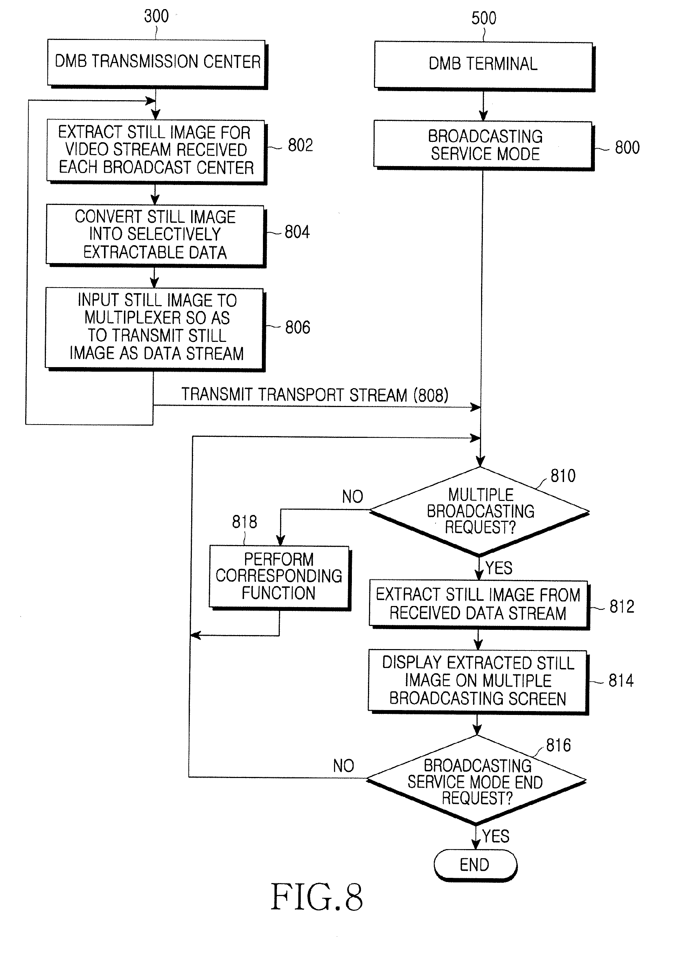

Referring to FIG. 6. a digital broadcast receiving unit 603 receives DMB signals through an antenna, de-multiplexes transport packets, and parses the demultiplexed transport packets into video data or audio data through a decoding process. A buffer 604 temporarily stores the decoded video or audio data and transmits decoded video and audio data to a multimedia unit 602 under the control of a controller 601. The multimedia unit 602 performs the function of the controller during a DMB broadcasting service and outputs each of the video and audio data transmitted through the digital broadcast receiving unit 603 to a display unit 605 and an audio processing unit 609. The controller 601 performs the overall control operation of the DMB terminal 500. The controller 601 controls multiple broadcasting video streams to be received through a frequency channel for receiving the multiple broadcasting video streams at a multiple broadcasting request during a DMB broadcasting service. The controller 601 also controls a broadcasting channel selected by a user to be displayed on a screen by means of the PIP function while a multiple broadcasting video stream is received. This control process will be described in detail with reference to FIGs. 7 and 8 below.

Under the control of the controller 601, the display unit 605 receives and displays display data for key input data input from a key input unit 606. Also, when a user sets or operates a necessary function, the display unit 605 enables the user to visually recognize the state of the function. When a multiple broadcasting service is provided, the display unit 605 displays sub-screens for two or more broadcasting channels on a single screen by means of the PIP function under the control of the controller 601. An audio processor 609 is connected to a Microphone (MIC) and a Speaker (SPK), converts audio signals transmitted from the controller 601, outputs the converted audio signals through the speaker, generates predetermined data from audio signals received from the microphone and transmits the generated data to the controller 601. The key input unit 606 is a device for an interface with a user and outputs specific key input data according to input of each key. The key input data output from the key input unit 606 are applied to the controller 601. The controller 601 detects key input having generated the key input data. As a result of the detection, the controller 601 performs a corresponding operation.

The key input unit 606 has a key for requesting a multiple broadcasting service. Such a multiple broadcasting service request key may also be implemented by a function key for performing other existing functions, or may be implemented by a separate key.

A memory unit 608 stores information relating to the overall functions of the DMB terminal and simultaneously stores broadcasting service-providing related information. A wireless unit 607 transmits and receives RF signals to/from a base station through an antenna under the control of the controller 601.

A process for providing a multiple broadcasting service in a broadcasting system including both the DMB transmission center 300 with the construction as illustrated in FIG. 3 and the DMB terminal 500 with the construction as illustrated in FIG. 6 will be described with reference to FIG. 7. Also, a process for providing a multiple broadcasting service in a broadcasting system which includes the DMB transmission center 300 having the construction as illustrated in FIG. 4 and the DMB terminal 500 having the construction as illustrated in FIG. 6 will be described with reference to FIG. 8

A method for displaying real-time images on a screen by means of the PIP function when a multiple broadcasting service is provided will be described.

Referring to FIGs. 3, 6 and 7, in step 700, it is assumed that the DMB terminal 500 is in a broadcasting service mode. In step 702, the DMB terminal center 300 reduces images for video streams received from each broadcasting center to images with a preset size through each of the image reduction units 340-1 to 340-N. In step 704, the DMB transmission center 300 generates a single video stream from each of the reduced images through the multiple broadcasting video stream generator 350. In step 706, the DMB transmission center 300 inputs the generated video streams to the multiplexer 320 so as to transmit the generated video streams through a separate channel. In step 708, the DMB transmission center 300 transmits the generated transport streams to the DMB terminal 500 through the multiplexer 320.

In step 710, the DMB terminal 500 determines if a multiple broadcasting request is received from a user while the broadcasting service mode is performed. If the user makes request for the multiple broadcasting service, step 712 is performed. Otherwise, step 718 is performed. In step 718, the DMB terminal 500 performs a corresponding function. In step 712, the DMB terminal 500 receives multiple broadcasting video streams through a separate channel for performing a multiple broadcasting function. The DMB terminal 500 decodes the received multiple broadcasting video streams, and displays a multiple broadcasting screen through the display unit 605 in step 714. All broadcasting channels provided as illustrated in FIG. 5A may also be displayed on a single screen or only broadcasting data for a broadcasting channel among multiple video streams selected by a user received as illustrated in FIG. 5B may also be displayed on a screen. When a broadcasting channel selected by a user is displayed on a screen, it is possible to display the channel by means of the PIP function. When a multiple broadcasting service is performed using the PIP function, reception and decoding process are performed for only one multiple broadcasting channel, without performing the reception and decoding process for all of the broadcasting channels selected by a user. In step 716, if an end request for the broadcasting service mode is received from a user, the DMB terminal 500 ends the broadcasting service mode. When performing a multiple broadcasting service using the PIP function, it is possible to minimize battery consumption because only a single multiple broadcasting channel is considered.

A method for displaying real-time images on a screen by means of the PIP function when a multiple broadcasting service is provided will now be described.

Referring to FIGs. 4, 6 and 8, it is assumed that the DMB terminal 500 is in a broadcasting service mode in step 800. In step 802, the DMB transmission center 300 extracts still images for video streams, which are received from each broadcasting center, through the samplers 440-1 to 440-N. In step 804, the DMB transmission center 300 converts the still images into a selectively extractable data through the data stream generator 450 for multiple broadcasting. In step 806, the DMB transmission center 300 inputs the still images to the multiplexer 320 so as to transmit the still images as data streams. The multiplexer 320 of the DMB transmission center 300 multiplexes the data streams for the still images for multiple broadcasting together with data streams, audio streams, and video streams which are received from the broadcasting centers, and generates a transport stream. In step 808, the DMB transmission center 300 transmits the generated transport stream.

In step 810, while a broadcasting service mode is performed, the DMB terminal 500 determines if a multiple broadcasting request is received from a user. If the user makes request for the multiple broadcasting service, step 812 is performed. Otherwise, in step 818, the DMB terminal 500 performs a corresponding function. In step 812, the DMB terminal 500 extracts still images from the received data streams. In step 814, the DMB terminal 500 displays the extracted still images on a screen. Herein, the screen for displaying the still images for multiple broadcasting is divided into sub-screens by the number of broadcasting channels to be displayed on a single screen, and is displayed in the form of a lattice.

Also, when one broadcasting channel is selected by a user from the broadcasting channels displayed on the screen as described above, a broadcasting service may also be provided through the selected broadcasting channel. In step 816, if an end request for the broadcasting service mode is received from a user, the DMB terminal 500 ends the broadcasting service mode. Otherwise, step 810 is performed. Since the data streams, which are received in the DMB terminal 500, include data for still images for multiple broadcasting and the data are selectively extractable, the DMB terminal 500 can extract the still images.

According to the present invention as described above, when a DMB terminal implements a multiple broadcasting service by means of the PIP function, screens of all broadcasting channels can be provided through a single separate channel, so that battery consumption of a terminal can be minimized Further, according to the present invention as described above, all broadcasting channels can be displayed on a single screen by means of the PIP function at a multiple broadcasting request, so that a user can more easily select a channel.

Although preferred embodiments of the present invention has been described for illustrative purposes, those skilled in the art will appreciate that various modifications, additions and substitutions are possible, without departing from the scope of the invention as disclosed in the accompanying claims.

## Claims

1. A broadcasting system for providing a multiple broadcasting service, comprising:
a digital multimedia broadcasting transmission center for reducing image data in broadcasting data for each of one or more broadcasting channels, generating a transport stream including a separate channel for multiple broadcasting from the reduced image data, and broadcasting the generated transport stream; and
a digital multimedia broadcasting terminal for receiving the reduced image data through a multiple broadcasting channel, decoding the reduced image data, and displaying the decoded image data on a screen.

2. The broadcasting system as claimed in claim 1, wherein the reduced image data has a preset size corresponding to a size to reduce the image data of each of said one or more broadcasting channels such that all of said one or more broadcasting channels can be displayed on a single screen of the digital multimedia broadcasting terminal by means of a picture in picture function.

3. The broadcasting system as claimed in claim 1 or 2, wherein the digital multimedia broadcasting transmission center comprises:
image reduction units for reducing the image data in the broadcasting data for each of said one or more broadcasting channels to the reduced image data having a preset size;
a video stream generator for generating video streams from image data output from the image reduction units;
a multiplexer for multiplexing the video streams together with the broadcasting data for each of said one or more broadcasting channels, thereby generating the transport stream, the video streams being output from the video stream generator; and
a digital multimedia broadcasting transmitter for broadcasting the transport stream output from the multiplexer.

4. The broadcasting system as claimed in claim 3, wherein the digital multimedia broadcasting terminal comprises:
a digital multimedia broadcasting receiver for receiving the transport stream;
a display unit for displaying multiple broadcasting image data; and
a controller for receiving the reduced image data for each of said one or more broadcasting channels through the multiple broadcasting channel , decoding the received image data, and displaying a multiple broadcasting screen through the display unit.

5. The broadcasting system as claimed in one of claims 1 to 4, wherein the multiple broadcasting channel corresponds to a channel for transmitting the video streams obtained by reducing broadcasting images of all of said one or more broadcasting channels, and is provided separately with all of said one or more broadcasting channels capable of providing a broadcasting service.

6. A broadcasting system for providing a multiple broadcasting service, comprising:
a digital multimedia broadcasting transmission center for extracting still images from image data in broadcasting data for each of one or more broadcasting channels, converting the extracted still images into selectively extractable data, generating a transport stream including data streams for the converted still images, and broadcasting the generated transport stream; and
a digital multimedia broadcasting terminal for receiving the data streams, extracting the still images from the data streams, and displaying the extracted still images on a screen.

7. The broadcasting system as claimed in claim 6, wherein the digital multimedia broadcasting transmission center reduces the extracted still images to reduced images with a preset size, and converts the reduced images into the selectively extractable data.

8. The broadcasting system as claimed in claim 7, wherein the preset size corresponds to a size to reduce each of said one or more broadcasting channels such that all of said one or more broadcasting channels can be displayed on a single screen of the digital multimedia broadcasting terminal by means of a picture in picture function.

9. The broadcasting system as claimed in one of claims 6 to 8, wherein the digital multimedia broadcasting transmission center comprises:
samplers for extracting the still images from the image data in the broadcasting data for each of said one or more broadcasting channels;
a data stream generator for converting the still images output from the samplers into the selectively extractable data;
a multiplexer for generating the transport stream including the data streams for the converted still images; and
a digital multimedia broadcasting transmitter for broadcasting the transport stream output from the multiplexer.

10. The broadcasting system as claimed in claim 9, wherein the digital multimedia broadcasting terminal comprises:
a digital multimedia broadcasting receiver for receiving the transport stream;
a display unit for displaying a multiple broadcasting screen; and
a controller for extracting the still images for all of said one or more broadcasting channels from the data streams , and displaying the extracted still images through the display unit.

11. The broadcasting system as claimed in claim 10, wherein the controller controls the still images extracted from all of said one or more broadcasting channels to be displayed on a single screen.

12. A method for providing a multiple broadcasting service in a broadcasting system, the method comprising:
reducing by a digital multimedia broadcasting transmission center image data in broadcasting data for each of one or more broadcasting channels, generating a transport stream including a separate channel for multiple broadcasting from the reduced image data, and broadcasting the generated transport stream; and
receiving by a digital multimedia broadcasting terminal the reduced image data through a multiple broadcasting channel, decoding the reduced image data, and displaying the decoded image data on a screen.

13. The method as claimed in claim 12, wherein the reduced data has a preset size corresponds to a size to reduce the image data of each of said one or more broadcasting channels such that all of said one or more broadcasting channels can be displayed on a single screen of the digital multimedia broadcasting terminal by means of a picture in picture function.

14. The method as claimed in claim 12 or 13, wherein the reducing step comprises:
reducing the image data in the broadcasting data for each of said one or more broadcasting channels to the reduced image data;
generating video streams from the reduced image data for each of said one or more broadcasting channels;
generating the transport stream by multiplexing the generated video streams together with the broadcasting data for each of said one or more broadcasting channels, and broadcasting the transport stream.

15. The method as claimed in one of claims 12 to 14, wherein the multiple broadcasting channel corresponds to a channel for transmitting the video streams obtained by reducing broadcasting images of all of said one or more broadcasting channels, and is provided separately with all of said one or more broadcasting channels capable of providing a broadcasting service.

16. A method for providing a multiple broadcasting service in a broadcasting system, the method comprising:
extracting by a digital multimedia broadcasting transmission center extracting still images from image data in broadcasting data for each of one or more broadcasting channels, converting the extracted still images into selectively extractable data, generating a transport stream including data streams for the converted still images, and broadcasting the generated transport stream; and
receiving by a digital multimedia broadcasting terminal the data streams , extracting the still images from the data streams, and displaying the extracted still images on a screen.

17. The method as claimed in claim 16, wherein the digital multimedia broadcasting transmission center reduces the extracted still images to reduced images with a preset size, and converts the reduced images into the selectively extractable data.

18. The method as claimed in claim 17, wherein the preset size corresponds to a size to reduce each of said one or more broadcasting channels such that all of said one or more broadcasting channels can be displayed on a single screen of the digital multimedia broadcasting terminal by means of a picture in picture function.

19. The method as claimed in one of claims 16 to 18, wherein extracting the first step comprises:
extracting the still images from the image data in the broadcasting data for each of said one or more broadcasting channels;
converting the still images for each of said one or more broadcasting channels into the selectively extractable data; and
generating the transport stream including the data streams for the converted still images, and broadcasting the transport stream.

20. The method as claimed in claim 18, wherein the receiving step further comprises displaying the still images extracted from all of said one or more broadcasting channels on the single screen by means of the picture in picture function.
